# EUROPÄISCHE PATENTSCHRIFT

(11) **EP 3 473 406 B1**
(45) Veröffentlichungstag und Bekanntmachung des Hinweises auf die Patenterteilung: **03.12.2025**
(21) Anmeldenummer: 18201130.4
(22) Anmeldetag: 18.10.2018
(51) Int. Cl.: B29C 49/36, B29C 49/46

(54) **BLASFORMMASCHINE MIT REINRAUM UND AUSSCHLEUSUNG VON BEHÄLTNISSEN**
BLOW MOULDING MACHINE WITH CLEAN ROOM AND OUTWARD TRANSFER OF CONTAINERS
MACHINE DE MOULAGE PAR SOUFFLAGE POURVUE DE SALLE BLANCHE ET DÉCHARGE DE RÉCIPIENTS

(30) Priorität: 18.10.2017 DE 102017124331
(43) Veröffentlichungstag der Anmeldung: 24.04.2019
(73) Patentinhaber: Krones AG, 93073 Neutraubling (DE)
(72) Erfinder: Müller, Holger, 93073 Neutraubling (DE); Söllner, Jürgen, 93073 Neutraubling (DE)
(74) Vertreter: Hannke Bittner & Partner mbB Regensburg

(56) Entgegenhaltungen:
- EP-A2- 2 412 511
- EP-A2- 2 537 663
- DE-A1- 102005 060 814
- DE-A1- 102008 020 121
- DE-A1- 102015 118 619
- DE-A1- 102015 122 025
- DE-U1- 202011 109 959
- JP-B2- 5 831 673

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen sind aus dem Stand der Technik seit langem bekannt. Hierzu ist es bekannt, dass erwärmte Kunststoffvorformlinge einer Umformungseinrichtung während einer Blasmaschine zugeführt werden und mittels dieser Blasmaschine zu Kunststoffbehältnissen wie beispielsweise Kunststoffflaschen umgeformt werden. In jüngerer Zeit ist es bekannt geworden, derartige Blasformmaschinen steril auszugestalten.

Dies bedeutet, dass die Blasformmaschinen einen Reinraum aufweisen, innerhalb dessen der Umformungsprozess stattfindet. Bei einer derartigen sterilen Blasmaschine ist diese in einer Isolatorbauweise ausgeführt und wird während der Produktionsvorbereitung mit einem Sterilisationsmittel, wie beispielsweise verdampftem Wasserstoffperoxid in einen sterilen Zustand gebracht. Dieser Zustand darf während der anschließenden Produktion nicht verlassen werden, da die Kunststoffvorformlinge vor dem Einlauf in das Blasmodul, beispielsweise in einem sogenannten Zwischenmodul, sterilisiert werden. Um den sterilen Zustand aufrecht zu halten, wird zum Teil mit Hilfe einer Lüftungstechnik ein Überdruck in diesem Isolator hergestellt.

Aus den genannten Gründen ist es erforderlich beziehungsweise vorteilhaft, den genannten Isolator hinsichtlich seines Raumes oder seiner Abmessungen gering zu halten. Die hohen Anforderungen an den Isolator mit seinen Abdichtungen nach Außen lassen daher derzeit nur ein begrenztes Volumen zu beispielsweise für durch Blasfehler auszuschleusende Behältnisse. Behältnisse, die beispielsweise auf Grund von Fehlern nicht weiter, etwa zu einem Füller transportiert werden können, da der Blasprozess nicht erfolgreich war, werden derzeit am Auslauf eines Transfersterns des Blasmoduls ausgeworfen und verbleiben dort bis zum Ende der Produktion liegen.

Übersteigt das Volumen der ausgeschleusten Behältnisse den vorhanden Platzbedarf ist es teilweise erforderlich, dass der Isolator geöffnet wird. Dies hat ein vorzeitiges Beenden der Produktion zur Folge, da die Sterilität des Isolators unterbrochen wird. Im Stand der Technik sind teilweise Vorrichtungen bekannt, bei denen die Kunststoffbehältnisse in einem bestimmten Bereich gelagert werden. Dabei ist es auch aus dem internen Stand der Technik bekannt, dass ein Scherbenwagen vorgesehen wird, der auch während des Produktionsprozesses entleert und nachfolgend wieder sterilisiert werden kann.

Ausgehend von diesem Stand der Technik stellt sich die Aufgabe, eine Vorrichtung und ein Verfahrung zur Verfügung zu stellen, welche auch und insbesondere im laufenden Betrieb ein Entleeren beziehungsweise eine Entnahme von fehlerhaften Behältnissen ermöglichen und insbesondere eine Vorgehensweise bei der eine derartige Entnahme ohne ein kontaminierendes Öffnen des Reinraums beziehungsweise ohne Zerstörung der Reinraumbedingungen erfolgen kann. Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Das Dokument DE 10 2015 122025 offenbart eine Vorrichtung zum Umformen von Kunststoffvorformlingen zu Kunststoffbehältnissen mit einer Transporteinrichtung, welche die Kunststoffvorformlinge und/oder die Kunststoffbehältnisse entlang eines vorgegebenen Transportpfads transportiert, wobei diese Transporteinrichtung einen beweglichen Träger aufweist, an dem eine Vielzahl von Umformungsstationen angeordnet ist, welche jeweils zum Umformen der Kunststoffvorformlingen zu den Kunststoffbehältnissen geeignet und bestimmt sind, mit einem Reinraum, der den Transportpfad der Kunststoffvorformlinge und/oder der Kunststoffbehältnisse wenigstens abschnittweise umgibt und der mittels wenigstens einer Wandung gegenüber einer Umgebung abgegrenzt ist, wobei die Vorrichtung eine Ausschleuseeinrichtung aufweist, welche dazu geeignet und bestimmt ist, Kunststoffbehältnisse aus dem Reinraum auszuschleusen, die Vorrichtung einen Aufnahmeraum zum Aufnehmen ausgeschleuster Kunststoffbehältnisse aufweist, welcher gelegentlich nicht unter sterilen Bedingungen gehalten wird, wobei der Ausschleuseraum generell mit einer Sterilisationsmedium enhaltene Atmosphäre beaufschlagt wird aber nicht während der Entleerung der Aufnahmeeinrichtung, und die Vorrichtung eine Absaugeinrichtung aufweist, welche dazu geeignet und bestimmt ist, ein gasförmiges Medium aus dem Reinraum abzusaugen.

Eine erfindungsgemäße Vorrichtung zum Umformen von Kunststoffvorformlingen zu Kunststoffbehältnissen weist eine Transporteinrichtung auf, welche die Kunststoffvorformlinge und/oder Kunststoffbehältnisse entlang eines vorgegebenen Transportpfads transportiert. Dabei weist die Transporteinrichtung einen beweglichen Träger auf, an dem eine Vielzahl von Umformungsstationen angeordnet ist, welche jeweils zum Umformen der Kunststoffvorformlinge zu den Kunststoffbehältnissen geeignet und bestimmt sind. Weiterhin weist die Vorrichtung einen Reinraum auf, der den Transportpfad der Kunststoffvorformlinge wenigstens abschnittsweise umgibt und der mittels wenigstens einer Wandlung gegenüber einer Umgebung, insbesondere einer sterilen Umgebung abgegrenzt ist.

Erfindungsgemäß weist die Vorrichtung eine Ausschleuseeinrichtung aus, welche dazu geeignet und bestimmt ist Kunststoffbehältnisse und insbesondere einzelne Kunststoffbehältnisse aus dem Reinraum auszuschleusen.

Unter einem Ausschleusen wird insbesondere verstanden, dass die besagten Behältnisse aus dem weiterführenden Behältnistrom ausgesondert werden und damit nicht mehr weiter verarbeitet, beispielsweise befüllt werden. Nicht ausgeschleuste Behältnisse hingegen werden weiterverarbeitet und beispielsweise befüllt, verschlossen, usw. Insbesondere handelt es sich bei den ausgeschleusten Behältnissen um fehlerhafte beziehungsweise fehlerhaft hergestellte Kunststoffbehältnisse.

Insbesondere ist die Ausschleuseeinrichtung dazu geeignet und bestimmt, ein derartiges Ausschleusen in einem laufenden Betrieb der Vorrichtung durchzuführen.

Bei einer bevorzugten Ausführungsform ist ein derartiges Ausschleusen der Behältnisse ohne eine Öffnung des Reinraums möglich und insbesondere ohne die Reinraumatmosphäre zu zerstören bzw. zu beeinträchtigen. Damit wird insbesondere der sterile Betrieb der Blasformmaschine nicht beeinträchtigt. Bei einer bevorzugten Ausführungsform weisen die einzelnen Umformungsstationen jeweils Blasformen auf, welche einen Hohlraum ausbilden, innerhalb derer die Kunststoffvorformlinge zu den Kunststoffbehältnissen umformbar sind.

Vorteilhaft weisen die Umformungsstationen auch Blasformträger auf, an denen die Blasformen bzw. Blasformteile zumindest mittelbar angeordnet sind. Dabei ist es denkbar, dass diese Blasformteile beispielsweise temperierbar sind und insbesondere mittels eines fließfähigen Mediums und/oder mittels elektrischer Energie temperierbar sind. Bei einer weiteren Ausführungsform weisen die Umformungsstationen jeweils stangenartige Körper, insbesondere sogenannte Reckstangen auf, welche in die Kunststoffvorformlinge einführbar sind, um diese in deren Längsrichtung zu dehnen.

Bei einer weiteren vorteilhaften Ausführungsform handelt es sich bei den beweglichen Träger um einen drehbaren Träger, an dem die Umformungsstationen angeordnet sind. Insbesondere handelt es sich dabei um ein sogenanntes Blasrad, an dem die einzelnen Umformungsstationen angeordnet sind.

Bei einer weiteren vorteilhaften Ausführungsform weist die Vorrichtung eine Erwärmungseinrichtung auf, welche zum Erwärmen der Kunststoffvorformlinge geeignet und bestimmt ist. Bei einer weiteren vorteilhaften Ausführungsform umgibt der Reinraum die Kunststoffvorformlinge kanalartig. Dies bedeutet, dass bevorzugt nicht die gesamte Vorrichtung zum Umformen sich im Reinraum befindet, sondern insbesondere derjenige Bereich, indem der eigentliche Umformungsvorgang durchgeführt wird. Auf diese Weise kann, wie oben erwähnt, der Reinraum in der gewünschten Weise vergleichsweise gering gehalten werden.

Bei einer weiteren bevorzugten Ausführungsform wird der Reinraum von wenigstens zwei Wandungen begrenzt, die bezüglich einander beweglich sind. Dabei kann eine Dichtungseinrichtung vorgesehen sein, welche den Bereich zwischen diesen beiden bezüglich einander beweglichen Wandungen abdichtet. Bei dieser Dichtungseinrichtung kann es sich beispielsweise um eine sogenanntes Wasserschloss handeln, welches einen umlaufenden, mit einer Flüssigkeit befüllten Kanal aufweist, in den ein bestimmter Wandungsabschnitt eintaucht.

Die Vorrichtung weist eine Absaugeinrichtung auf, welche dazu geeignet und bestimmt ist, ein gasförmiges Medium aus dem Reinraum abzusaugen.

Bei dieser Ausgestaltung wird insbesondere davon ausgegangen, dass eine Absaugeinrichtung und eine zusätzliche Absaugeinrichtung vorgesehen ist, insbesondere in dem Bereich der notwendigen Behältnisausschleusung. Diese zusätzliche Absaugeinrichtung ist geeignet und bestimmt, um einen lokalen Unterdruck im Bereich der Behältnisausschleusung zu erzeugen. Mit einem hohen Ansaugdruck, beispielsweise in einem Bereich von -600 bis -2000 Pa, bevorzugt -800 bis -1500 Pa, wird lokal ein Unterdruck erzeugt. Dabei kann zusätzlich ein angesetztes Rohr oder ein Kanal vorgesehen sein, über welchen lokal die Behältnisse angesaugt werden.

Bei einer bevorzugten Ausführungsform weist daher wenigstens eine Wandung des Reinraums eine Öffnung auf, durch welche hindurch Kunststoffbehältnisse aus dem Reinraum abführbar sind. Damit weist bevorzugt diese Öffnung eine Größe auf, welche auch ein Ausschleusen von fertig umgeformten Behältnissen ermöglicht. Zu diesem Zweck kann beispielsweise innerhalb des Isolators ein sogenannter Saugstutzen angeordnet sein, der das Ansaugen der Kunststoffbehältnisse ermöglicht. Dabei ist es möglich, dass die Vorrichtung eine Auswurfeinrichtung aufweist, welche ein Auswerfen von Kunststoffbehältnissen in einem genau definierten Bereich, beispielweise oberhalb der besagten Öffnung, ermöglicht. In diesem Falle ist es möglich, dass die Behältnisse nach oder während des Herabfallens bereits von der besagten Absaugeinrichtung abgesaugt werden.

Bei einer bevorzugten Ausführungsform ist es denkbar, dass diese Öffnung verschließbar ist und/oder hinsichtlich eines Öffnungsquerschnitts veränderbar ist. So ist es möglich, dass ein Querschnitt dieser Öffnung vergrößert wird, wenn ein Behältnis durch diese Öffnung ausgeschleust werden soll.

Bevorzugt ist daher die Absaugeinrichtung dazu geeignet und bestimmt, Behältnisse durch die besagte Öffnung aus dem Reinraum abzusaugen.

Bevorzugt ist diese Absaugeinrichtung auch dazu bestimmt, insbesondere permanent, ein gasförmiges Medium aus dem Reinraum abzusaugen. Auf diese Weise kann verhindert werden, dass durch die besagte Öffnung hindurch umgekehrt Keime in den Reinraum gelangen und so die Reinraumatmosphäre zerstören.

Die Vorrichtung weist einen Aufnahmeraum zum aufnehmen ausgeschleuster Kunststoffbehältnisse auf. Dieser Aufnahmeraum ist nicht unter sterilen Bedingungen gehalten. So ist es beispielsweise möglich, dass dieser Aufnahmeraum unterhalb des Reinraums angeordnet ist. So kann beispielsweise die Vorrichtung einen Träger aufweisen, und unterhalb dieses Trägers kann der besagte Aufnahmeraum, beispielsweise ein Aufnahmegehäuse, vorgesehen sein. Allgemein kann der Aufnahmeraum insbesondere unterhalb einer den Reinraum begrenzenden Wandung der Vorrichtung angeordnet sein.

Dabei hat bevorzugt dieser Aufnahmeraum Belüftungsöffnungen, sodass ein Luftstrom durch diesen hindurch treten kann.

Bei einer bevorzugten Ausführungsform weist die Ausschleuseeinrichtung eine Trenneinrichtung auf, um die ausgeschleusten Kunststoffvorformlinge von dem abgesaugten gasförmigen Medium zu trennen.

Auf diese Weise ist es möglich einerseits aus dem Reinraum ein gasförmiges Medium, insbesondere Luft, abzusaugen und andererseits zu erreichen, dass ebenfalls Behältnisse mitabgesaugt werden. Bei dieser Trenneinrichtung kann es sich beispielsweise um ein Prallblech handeln, welches zwar den Durchtritt von Luft erlaubt, welches jedoch die Bewegung der Kunststoffbehältnisse ablenkt und diese beispielsweise in den oben erwähnten Aufnahmeraum führt. Insbesondere können die Behältnisse an dieser Trenneinrichtung abprallen und von dort in den Aufnahmeraum gelangen.

Auf diese Weise ist es beispielsweise möglich, dass in einem Ansaugkanal, der sich an die oben erwähnte Öffnung anschließt, ein Lochblech und/oder Gitter vorgesehen ist, welches als Prallblech für die angesaugten Behältnisse dient, damit diese Behältnisse nicht in einem Gebläse landen, sondern abgelenkt werden. Dabei kann dieses Prallblech in einem Winkel angeordnet sein, für den ungefähr gilt, dass der Einfallswinkel gleich dem Ausfallswinkel ist. So kann beispielsweise diese Trenneinrichtung als Blech oder als plattenförmiger Körper mit Schlitzen ausgebildet sein, der gegenüber einer Bewegungsrichtung der Kunststoffbehältnisse in einem vorgegeben Winkel, beispielsweise um 45° zur Absaugeinrichtung eingebaut ist. Die Behältnisse werden daher von dieser Trenneinrichtung um 90° umgelenkt. In diesem Bereich kann sich eine Öffnung mit ausreichender Größe befinden, sodass die Behältnisse in den besagten Aufnahmeraum wie etwas einem Behälter prallen.

Vor dieser Öffnung kann auch ein Scherbenwagen in an sich bekannter Weise positioniert werden.

Bei einer weiteren vorteilhaften Ausführungsform weist die Vorrichtung eine Filtereinrichtung auf, welche zum Filtern der von der Absaugeinrichtung abgesaugten Luft geeignet und bestimmt ist. Auf diese Weise ist es auch möglich, die abgesaugte Luft wieder dem Reinraum zuzuführen. Dabei kann diese Filtereinrichtung oder die Absaugeinrichtung auch eine Pumpeneinrichtung aufweisen, die zum Erzeugen der Luftströmung geeignet und bestimmt ist.

Auf diese Weise ist es möglich, dass die Behältnisausschleuseeinrichtung in einen Luftkreislauf der Maschine eingebunden wird. So kann insgesamt die Maschine in einem Umluftbetrieb arbeiten und dabei auch zusätzlich die Funktion der Ausschleusung von Behältnissen übernehmen.

Auf diese Weise wird erreicht, dass die abgesaugte Luft aus dem Reinraum nicht verloren geht, sondern beispielsweise die Druckseite eines zusätzlichen Absauggebläses wieder in die Zuluft einer Luftbehandlungseinheit geführt wird. Auf diese Weise kann auch eine weitere Filtration erreicht werden. Als zusätzlicher Effekt, wird die so bereits steril filtrierte Luft aus dem Isolator als hochwertige Luft dem System wieder zugeführt.

Bei einer weiteren vorteilhaften Ausführungsform weist die Vorrichtung eine Inspektionseinrichtung zum Inspizieren der gefertigten Behältnisse auf. Vorteilhaft ist diese Inspektionseinrichtung in der Transportrichtung der Behältnisse stromaufwärts der besagten Ausschleusung angeordnet. Bevorzugt ist es möglich, dass die Vorrichtung eine Steuerungseinrichtung aufweist, welche dafür geeignet und bestimmt ist zu bewirken, dass Behältnisse in Reaktion auf ein Ergebnis eines Inspektionsprozesses ausgeschleust werden. So kann beispielsweise mittels der Inspektionseinrichtung die Fehlerhaftigkeit von Behältnissen festgestellt werden und diese in Reaktion ausgeschleust werden. Bevorzugt handelt es sich bei Inspektionseinrichtungen um eine optische Inspektionseinrichtung, welche die gefertigten Behältnisse inspiziert. Besonders bevorzugt ist diese Inspektionseinrichtung in einem Bereich der Vorrichtung angeordnet, der sich an das besagte Trägerrad anschließt.

In einer weiteren vorteilhaften Ausführungsform weist die Vorrichtung eine weitere Transporteinrichtung auf, welche sich an das oben erwähnte Blasrad anschließt und welche die gefertigten Behältnisse transportiert. Im Bereich dieser weiteren Transporteinrichtung ist bevorzugt auch die Ausschleusung bzw. die Ausschleuseeinrichtung vorgesehen. Besonders bevorzugt ist auch die besagte Inspektionseinrichtung in diesem Bereich vorgesehen, das heißt nach dem eigentlichen Blasrad bzw. der Transporteinrichtung, an der die Umformungsstationen angeordnet sind.

Die vorliegende Erfindung ist weiterhin auf ein Verfahren gemäß Anspruch 7 zum Umformen von Kunststoffvorformlingen zu Kunststoffvorbehältnissen gerichtet. Dabei werden die Kunststoffvorformlinge mit einer Transporteinrichtung entlang eines vorgegebenen Transportpfads transportiert, wobei diese Transporteinrichtung einen beweglichen Träger aufweist, an dem eine Vielzahl von Umformungsstationen angeordnet ist, welche jeweils die Kunststoffvorformlinge zu den Kunststoffbehältnissen umformen. Weiterhin werden die Kunststoffvorformlinge durch einen Reinraum transportiert, der den Transportpfad der Kunststoffvorformlinge wenigstens abschnittsweise umgibt und der mittels wenigstens einer Wandung gegenüber einer Umgebung abgegrenzt wird.

Erfindungsgemäß werden durch eine Ausschleuseeinrichtung wenigstens zeitweise Kunststoffbehältnisse aus dem Reinraum ausgeschleust. Es wird daher auch verfahrensseitig vorgeschlagen, dass gefertigte Kunststoffbehältnisse noch innerhalb des Reinraums aus diesem ausgeschleust werden.

Diese Kunststoffbehältnisse werden unter Verwendung eines Unterdrucks aus dem Reinraum ausgeschleust und insbesondere unter Verwendung eines Unterdrucks aus dem Reinraum abgesaugt. Besonders bevorzugt wird eine aus dem Reinraum abgesaugte Luft, welche auch zum Absaugen der Kunststoffbehältnisse dient dem System wenigstens teilweise wieder zugeführt.

Weitere Vorteile und Ausführungsformen ergeben sich aus den beigefügten Zeichnungen:

Darin zeigen:
- Fig. 1: Eine schematische Darstellung einer erfindungsgemäßen Vorrichtung;
- Fig. 2: Eine Darstellung einer erfindungsgemäßen Vorrichtung mit Behältnisausschleusung; und
- Fig. 3: Eine weitere Ansicht einer erfindungsgemäßen Vorrichtung.

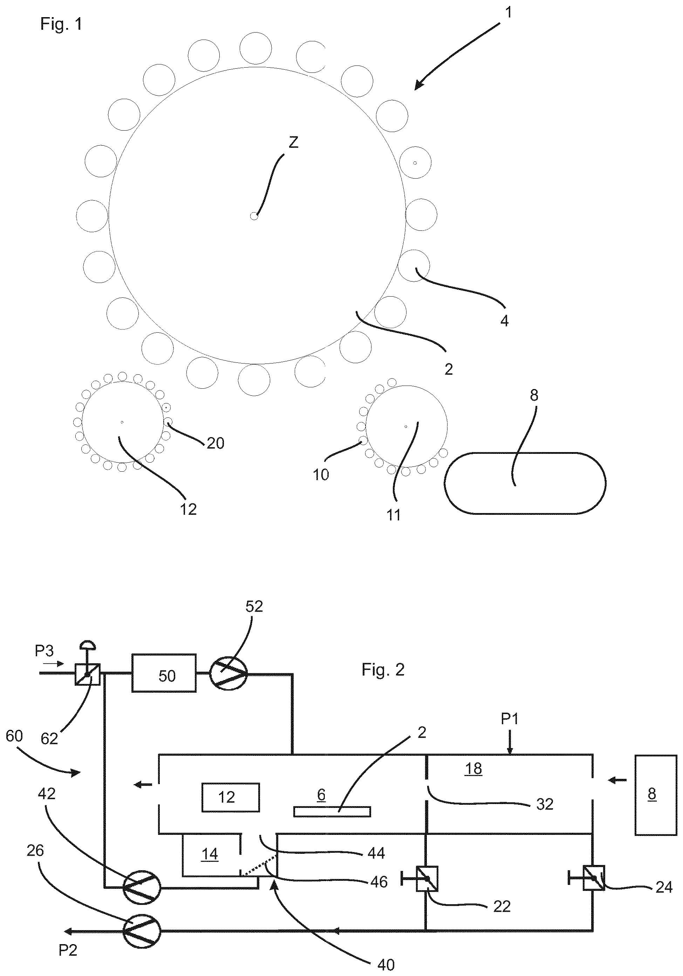

Fig. 1 zeigt eine schematische Darstellung einer erfindungsgemäßen Vorrichtung 1 zum Umformen von Kunststoffvorformlingen 10 zu Kunststoffbehältnissen 20. Diese Vorrichtung weist dabei einen drehbaren Träger 2 auf, an dem eine Vielzahl von Umformungsstationen 4 angeordnet ist. Dieser Träger 2 ist dabei um eine Drehachse Z drehbar.

Den einzelnen Umformungsstationen 4 werden die von einem Ofen erwärmten Kunststoffvorformlinge 10 zugeführt und während ihres Transports an dem Träger durch Beaufschlagung mit Blasluft zu den Kunststoffbehältnissen 20 umgeformt. Das Bezugszeichen 11 kennzeichnet eine weitere Transporteinrichtung, welche hier als Sternrad ausgeführt ist, welche die Kunststoffvorformlinge dem Träger bzw. den einzelnen Umformungsstationen 4 zuführt. Das Bezugszeichen 12 kennzeichnet eine weitere Transporteinrichtung, welche die so geblasenen Behältnisse von der Vorrichtung und insbesondere aus den Umformungsstationen 4 abführt.

Fig. 2 zeigt eine weitere Darstellung der erfindungsgemäßen Vorrichtung. Dabei ist insbesondere der Reinraum 6 dargestellt, innerhalb dessen der Umformungsprozess stattfindet. Innerhalb dieses Reinraums 6 ist auch wenigstens ein Abschnitt des Trägers 2 angeordnet (nur schematisch dargestellt) und insbesondere der Transportpfad der Kunststoffvorformlinge. Auch die Transporteinrichtung 12 ist innerhalb dieses Reinraums angeordnet. Auch hier ist es wiederrum möglich, dass nicht die gesamte Transporteinrichtung 12 innerhalb des Reinraums angeordnet ist, sondern lediglich der Bereich, indem die nunmehr gefertigten Kunststoffbehältnisse tatsächlich transportiert werden.

Das Bezugszeichen 8 kennzeichnet eine Heizeinrichtung bzw. Temperiereinrichtung, wie einen Ofen, der die Kunststoffvorformlinge erwärmt, bevor diese letztlich dem Umformungsprozess zugeführt werden. Das Bezugszeichen 18 kennzeichnet eine Sterilisationseinrichtung, welche dazu geeignet und bestimmt ist, die erwärmten Kunststoffvorformlinge zu sterilisieren. Zu diesem Zweck kann beispielsweise entlang des Pfeils P1 ein Sterilisationsmittel zugeführt werden. Dabei kann insbesondere aber nicht ausschließlich H2O2 oder Peressigsäure zugeführt werden, um die Kunststoffvorformlinge zu sterilisieren.

Bezugszeichen 22 und 24 kennzeichnen Ventileinrichtungen, welche für die Steuerung der Atmosphäre in der Sterilisationseinrichtung 18 bestimmt sind. Das Bezugszeichen 26 kennzeichnet eine Pumpeneinrichtung, welche dazu geeignet und bestimmt ist Luft aus dem Reinraum 6 und/oder der Sterilisationseinrichtung abzuführen. Auf diese Weise herrscht in dem Reinraum 6 stets ein Überdruck gegenüber der Umgebung und so kann eine Kontamination des Reinraums verhindert werden. Bezugszeichen 44 kennzeichnet eine Öffnung, über welche Behältnisse (nicht gezeigt) aus dem Reinraum abführbar sind. An diese Öffnung 44 schließt sich ein Kanal bzw. eine Leitung an, welche zum Abführen der Behältnisse (nicht gezeigt) dient.

Das Bezugszeichen 46 kennzeichnet eine Trenneinrichtung, wie insbesondere, aber nicht ausschließlich das oben erwähnte Prallblech, an welchem die Kunststoffvorformlinge abprallen um letztlich dem Aufnahmeraum 14 zugeführt zu werden. Der Aufnahmeraum 14 ist bereits außerhalb der Sterilraumgrenzen angeordnet.

Das Bezugszeichen 42 kennzeichnet einen Teil einer Absaugeinrichtung, hier eine Pumpe, welche zum Absaugen des gasförmigen Mediums aus dem Reinraum 6 dient. Auch erzeugt diese Pumpeneinrichtung einen so hohen Unterdruck, dass durch diesen auch die Behältnisse über die Öffnung 44 abgesaugt werden können.

Das Bezugszeichen 50 kennzeichnet grob schematisch eine Luftkonditioniereinheit, wie beispielsweise eine Filterungseinheit, eine Trocknungseinheit und dergleichen. Über eine weitere Pumpeneinrichtung 52 wird die nunmehr gefilterte Luft wieder dem Reinraum 6 zugeführt. Man erkennt, dass auch hier ein Kreislauf 60 vorgesehen ist, der sowohl zum Absaugen der Behältnisse aus dem Reinraum dient, als auch um einen Kreislauf für abgesaugte Luft zur Verfügung zu stellen.

Das Bezugszeichen P3 kennzeichnet eine Zuführung von Zuluft. Auch hier kann wiederum eine Steuerungseinrichtung wie ein Ventil 62 vorgesehen sein, welches zur Steuerung der von außen zugeführten Zuluft dient.

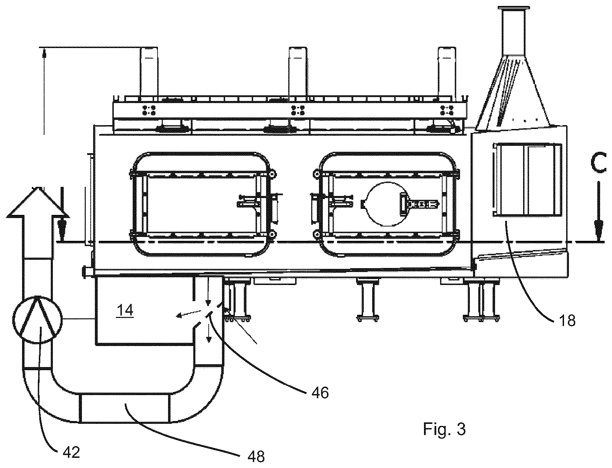

Fig. 3 zeigt eine Seitendarstellung einer erfindungsgemäßen Vorrichtung. Auch hier ist wieder die Leitung 48 erkennbar, über welche sowohl Luft aus dem Reinraum abführbar ist als auch der für das Absaugen der Behältnisse nötige Unterdruck erzeugt wird. Auch ist hier der Aufnahmeraum für die Behältnisse erkennbar. Daneben ist auch wieder die Sterilisationseinrichtung erkennbar, welche zum Sterilisieren der Kunststoffvorformlinge vor dem eigentlichen Blasvorgang dient.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Träger
- 4: Umformungsstationen
- 6: Reinraum
- 8: Heizeinrichtung, Erwärmungseinrichtung
- 10: Kunststoffvorformlinge
- 11: weitere Transporteinrichtung
- 12: weitere Transporteinrichtung
- 14: Aufnahmeraum
- 18: Sterilisationseinrichtung
- 20: Kunststoffbehältnisse
- 22,24: Ventileinrichtungen
- 26: Pumpeneinrichtung
- 42: Pumpe
- 44: Öffnung
- 46: Trenneinrichtung, Prallblech
- 48: Leitung
- 50: Luftkonditioniereinheit
- 52: Pumpen
- 60: Kreislauf
- 62: Ventil

- P1, P2: Richtung
- P3: Zuführung von Luft

## Patentansprüche

1. Vorrichtung (1) zum Umformen von Kunststoffvorformlingen (10) zu Kunststoffbehältnissen (20) mit einer Transporteinrichtung (2, 11, 12), welche die Kunststoffvorformlinge (10) und/oder die Kunststoffbehältnisse (20) entlang eines vorgegebenen Transportpfads (P) transportiert, wobei diese Transporteinrichtung einen beweglichen Träger (2) aufweist, wobei an dem Träger (2) eine Vielzahl von Umformungsstationen (4) angeordnet ist, welche jeweils zum Umformen der Kunststoffvorformlingen (10) zu den Kunststoffbehältnissen (20) geeignet und bestimmt sind, mit einem Reinraum (6), der den Transportpfad der Kunststoffvorformlinge (10) und/oder der Kunststoffbehältnisse (20) wenigstens abschnittweise umgibt und wobei der Reinraum (6) mittels wenigstens einer Wandung gegenüber einer Umgebung abgegrenzt ist, wobei die Vorrichtung (1) eine Ausschleuseeinrichtung (40) aufweist, welche dazu geeignet und bestimmt ist, Kunststoffbehältnisse (20) aus dem Reinraum (6) auszuschleusen,
wobei die Vorrichtung (1) einen Aufnahmeraum (14) zum Aufnehmen ausgeschleuster Kunststoffbehältnisse (20) aufweist, welcher nicht unter sterilen Bedingungen gehalten wird, und
die Vorrichtung (1) eine Absaugeinrichtung (42) aufweist, welche dazu geeignet und bestimmt ist, ein gasförmiges Medium aus dem Reinraum (6) abzusaugen sowie eine Filtereinrichtung (50), welche zum Filtern der von der Absaugeinrichtung (42) abgesaugten Luft geeignet und bestimmt ist, wobei
eine zusätzliche Absaugeinrichtung in dem Bereich der notwendigen Behältnisausschleusung vorgesehen ist, welche dazu geeignet und bestimmt ist, einen lokalen Unterdruck im Bereich der Behältnisausschleusung zu erzeugen.

2. Vorrichtung (1) nach Anspruch 1,
**dadurch gekennzeichnet, dass**
wenigstens eine Wandung des Reinraums (6) eine Öffnung (44) aufweist, durch welche hindurch Kunststoffbehältnisse aus dem Reinraum abführbar sind.

3. Vorrichtung (1) nach den Ansprüchen 1 und 2,
**dadurch gekennzeichnet, dass**
die Absaugeinrichtung (42) dazu geeignet und bestimmt ist, Kunststoffbehältnisse durch die Öffnung (44) aus dem Reinraum (6) abzusaugen.

4. Vorrichtung (1) nach wenigstens einem der vorangegangenen Ansprüche,
**dadurch gekennzeichnet, dass**
die Vorrichtung (1) eine Transporteinrichtung (12) aufweist, welche entlang des Transportpfads der Kunststoffbehältnisse (20) nach dem Träger (2) angeordnet ist und die Ausschleuseeinrichtung (40) in einem Bereich dieser Transporteinrichtung (12) angeordnet ist.

5. Vorrichtung (1) nach wenigstens einem der vorangegangenen Ansprüche,
**dadurch gekennzeichnet, dass**
die Ausschleuseeinrichtung (40) eine Trenneinrichtung (46) aufweist, um Kunststoffbehältnisse (20) von dem abgesaugten gasförmigen Medium zu trennen.

6. Vorrichtung (1) nach wenigstens einem der vorangegangenen Ansprüche,
**dadurch gekennzeichnet, dass**
die Vorrichtung (1) eine Inspektionseinrichtung (18) zum Inspizieren der gefertigten Behältnisse aufweist.

7. Verfahren zum Umformen von Kunststoffvorformlingen (10) zu Kunststoffbehältnissen (20) wobei die Kunststoffvorformlinge mit einer Transporteinrichtung (2, 11, 12) entlang eines vorgegebenen Transportpfads (P) transportiert werden und wobei diese Transporteinrichtung einen beweglichen Träger (2) aufweist, wobei an dem Träger (2) eine Vielzahl von Umformungsstationen (4) angeordnet ist, welche jeweils die Kunststoffvorformlinge (10) zu den Kunststoffbehältnissen (20) umformen, und wobei die Kunststoffvorformlinge durch einen Reinraum (6) transportiert werden, der den Transportpfad der Kunststoffvorformlinge (10) wenigstens abschnittweise umgibt und wobei der Reinraum (6) mittels wenigstens einer Wandung gegenüber einer Umgebung abgegrenzt wird, wobei die Vorrichtung (1) eine Ausschleuseeinrichtung (40) aufweist, welche wenigstens zeitweise Kunststoffbehältnisse (20) aus dem Reinraum (6) ausschleust,
wobei
eine Absaugeinrichtung (42) vorgesehen ist, welche ein gasförmiges Medium aus dem Reinraum (6) absaugt sowie eine Filtereinrichtung (50), welche die von der Absaugeinrichtung (42) abgesaugte Luft filtert,
und ein Aufnahmeraum (14) zum Aufnehmen ausgeschleuster Kunststoffbehältnisse (20) vorgesehen ist, welcher nicht unter sterilen Bedingungen gehalten wird, wobei eine zusätzliche Absaugeinrichtung in dem Bereich der notwendigen Behältnisausschleusung vorgesehen ist, welche dazu geeignet und bestimmt ist, einen lokalen Unterdruck im Bereich der Behältnisausschleusung zu erzeugen.

## Claims

1. Apparatus (1) for forming plastic preforms (10) into plastic containers (20), having a transport device (2, 11, 12) which transports the plastic preforms (10) and/or the plastic containers (20) along a predetermined transport path (P), wherein this transport device has a movable carrier (2), wherein a plurality of forming stations (4) are arranged on the carrier (2), which are each suitable and intended for forming the plastic preforms (10) into the plastic containers (20), with a clean room (6) which at least partially surrounds the transport path of the plastic preforms (10) and/or the plastic containers (20), and wherein the clean room (6) is separated from the environment by at least one wall, wherein the apparatus (1) has an ejection device (40) which is suitable and designed for ejecting plastic containers (20) from the clean room (6), wherein
the apparatus (1) has a receiving space (14) for receiving ejected plastic containers (20), which is not kept under sterile conditions, and
the apparatus (1) has a suction device (42) which is suitable and intended to sucking off a gaseous medium from the clean room (6) and a filter device (50) which is suitable and designed to filter the air sucked off by the suction device (42), wherein
an additional suction device is provided in the area of the necessary container discharge, which is suitable and intended to generate a local negative pressure in the area of the container discharge.

2. Apparatus (1) according to claim 1,
**characterized in that**
at least one wall of the clean room (6) has an opening (44) through which plastic containers can be removed from the clean room.

3. Apparatus (1) according to claims 1 and 2,
**characterized in that**
the suction device (42) is suitable and intended to suck plastic containers out of the clean room (6) through the opening (44).

4. Apparatus (1) according to at least one of the preceding claims,
**characterized in that**
the apparatus (1) has a transport device (12) which is arranged along the transport path of the plastic containers (20) after the carrier (2) and the suction device (40) is arranged in a region of this transport device (12).

5. Apparatus (1) according to at least one of the preceding claims,
**characterized in that**
the discharge device (40) has a separating device (46) for separating plastic containers (20) from the sucked off gaseous medium.

6. Apparatus (1) according to at least one of the preceding claims,
**characterized in that**
the apparatus (1) has an inspection device (18) for inspecting the manufactured containers.

7. Method for forming plastic preforms (10) into plastic containers (20) wherein the plastic preforms are transported by a transport device (2, 11, 12) along a predetermined transport path (P) and wherein this transport device has a movable carrier (2), wherein a plurality of forming stations (4) are arranged on the carrier (2), which respectively form the plastic preforms (10) into the plastic containers (20), and wherein the plastic preforms are transported through a clean room (6) which surrounds the transport path of the plastic preforms (10) at least in sections, and wherein the clean room (6) is separated from an environment by at least one wall, wherein the apparatus (1) has an ejection device (40) which at least temporarily ejects plastic containers (20) from the clean room (6), wherein
a suction device (42) is provided which sucks off a gaseous medium from the clean room (6), and a filter device (50) which filters the air sucked off by the suction device (42),
and a receiving space (14) for receiving ejected plastic containers (20) is provided, which is not kept under sterile conditions, wherein an additional suction device is provided in the area of the necessary container ejection, which is suitable and intended to generate a local negative pressure in the area of the container ejection.

## Revendications

1. Dispositif (1) de mise en forme de préformes en plastique (10) en récipients en plastique (20) avec un système de transport (2, 11, 12) qui transporte les préformes en plastique (10) et/ou les récipients en plastique (20) le long d'un trajet de transport (P) prédéfini, dans lequel ledit système de transport présente un support mobile (2), dans lequel une pluralité de stations de mise en forme (4) sont disposées sur le support (2), lesquelles sont adaptées pour et se destinent respectivement à la mise en forme des préformes en plastique (10) en les récipients en plastique (20), avec une salle blanche (6), qui entoure le trajet de transport des préformes en plastique (10) et/ou des récipients en plastique (20) au moins par sections et dans lequel la salle blanche (6) est délimitée par au moins une paroi par rapport à un environnement, dans lequel le dispositif (1) présente un système d'éjection (40) qui est adapté pour et se destine à évacuer des récipients en plastique (20) de la salle blanche (6), dans lequel
le dispositif (1) présente un espace de réception (14) pour recevoir des récipients en plastique (20) éjectés, qui n'est pas maintenu dans des conditions stériles, et
le dispositif (1) présente un système d'évacuation par aspiration (42), qui est adapté pour et se destine à évacuer par aspiration un milieu gazeux hors de la salle blanche (6), ainsi qu'un système de filtrage (50), qui est adapté pour et se destine à filtrer l'air évacué par aspiration par le système d'évacuation par aspiration (42), dans lequel
un système d'évacuation par aspiration supplémentaire est prévu dans la zone de l'éjection de récipients nécessaire, lequel est adapté pour et se destine à générer une dépression locale dans la zone de l'éjection de récipients.

2. Dispositif (1) selon la revendication 1,
**caractérisé en ce que**
au moins une paroi de la salle blanche (6) présente une ouverture (44), à travers laquelle des récipients en plastique peuvent être évacués de la salle blanche.

3. Dispositif (1) selon les revendications 1 et 2,
**caractérisé en ce que**
le dispositif d'évacuation par aspiration (42) est adapté pour et se destine à évacuer par aspiration des récipients en plastique hors de la salle blanche (6) par l'ouverture (44).

4. Dispositif (1) selon au moins l'une quelconque des revendications précédentes,
**caractérisé en ce que**
le dispositif (1) présente un système de transport (12), qui est disposé le long du trajet de transport des récipients en plastique (20) après le support (2) et le dispositif d'éjection (40) est disposé dans une zone dudit système de transport (12).

5. Dispositif (1) selon au moins l'une quelconque des revendications précédentes,
**caractérisé en ce que**
le système d'éjection (40) présente un système de séparation (46) pour séparer des récipients en plastique (20) du milieu gazeux évacué par aspiration.

6. Dispositif (1) selon au moins l'une quelconque des revendications précédentes,
**caractérisé en ce que**
le dispositif (1) présente un système d'inspection (18) pour inspecter les récipients fabriqués.

7. Procédé de mise en forme de préformes en plastique (10) en récipients en plastique (20), dans lequel les préformes en plastique sont transportées avec un système de transport (2, 11, 12) le long d'un trajet de transport (P) prédéfini et dans lequel ledit système de transport présente un support mobile (2), dans lequel une pluralité de stations de mise en forme (4) sont disposées sur le support (2), lesquelles mettent en forme respectivement les préformes en plastique (10) en les récipients en plastique (20), et dans lequel les préformes en plastique sont transportées à travers une salle blanche (6) qui entoure au moins par endroits le trajet de transport des préformes en plastique (10) et dans lequel la salle blanche (6) est délimitée par au moins une paroi par rapport à un environnement, dans lequel le dispositif (1) présente un système d'éjection (40) qui évacue au moins temporairement des récipients en plastique (20) de la salle blanche (6), dans lequel
sont prévus un système d'évacuation par aspiration (42), lequel évacue par aspiration un milieu gazeux de la salle blanche (6), ainsi qu'un système de filtrage (50), qui filtre l'air évacué par aspiration par le système d'évacuation par aspiration (42),
et un espace de réception (14) est prévu pour recevoir des récipients en plastique (20) éjectés, lequel n'est pas maintenu dans des conditions stériles, dans lequel un système d'évacuation par aspiration supplémentaire est prévu dans la zone de l'éjection de récipient nécessaire, qui est adapté pour et se destine à générer une dépression locale dans la zone de l'éjection de récipient.
